# EUROPEAN PATENT APPLICATION

(11) **EP 2 400 075 A2**
(43) Date of publication of application: **28.12.2011**
(21) Application number: 11171138.8
(22) Date of filing: 23.06.2011
(51) Int. Cl.: E04C 2/16, E04B 1/80

(54) **Protection impregnated thermal insulation and process for its manufacture**

(30) Priority: 24.06.2010 FI 20105735
(71) Applicant: Ekovilla OY, 45720 Kuusankoski (FI)
(72) Inventor: Louko, Reijo, 45720 Kuusankoski (FI); Ahonen, Heikki, Ritvala 37720 (FI)
(74) Representative: Sundman, Patrik Christoffer

(57) **Abstract**

The present invention relates to a thermal insulation product manufactured from plant-based fibre material, the density of which is 20-120 kg/m³, and the fibre material of which is impregnated with an impregnation solution which contains a mixture of fire retardant and anti-mould agent dissolved in a solvent composition which is formed of a poorly evaporating solvent containing OH groups, which solvent is capable of preventing the crystallization of the fire retardants and anti-mould agents and allows them to diffuse into the fibres and chips of the fibre material for a long time, or of a mixture of several such solvents. The invention also relates to a process for manufacturing such a product, wherein the impregnation is carried out using at least a slight overpressure.

## Description

The present invention concerns a thermal insulation product manufactured from a plant-based fibre material and a process for its manufacture, wherein the plant-based fibre or the material, from which the thermal insulator is formed, is given a protective impregnation.

Wood fibre -based or cellulose-based thermal insulators are traditionally treated with mixtures of borax and boric acid in such a way that these compounds are refined and mixed into the material during defibring of the material.

The prior art is described, among others, in US 200968430 A1 (Homatherm AG), where borax and boric acid as well as ammonium phosphate and potassium carbonate are used as fire retardants. The aim of the publication is to generate a thermal and sound insulation material for vehicles, and further enable recycling of the product into a growth substrate at a later stage. As binder for the wood fibres, polyvinyl alcohol or polyolefin fibres are used.

US 200060148364 A1 (Kronotec AG) describes a product wherein wood fibres are bound to each other by polymer granules. As fire retardants, a traditional mix of borax-boric acid is used.

FI patent 109709 (Ekovilla Oy) describes a process and a product wherein, in addition to fire retardants, an aqueous solution of polyvinyl alcohol is used as binder, which immediately gels the boric acid. In order to avoid this, carboxymethyl cellulose is added into the PVA solution, which cellulose reduces the rate of gelling.

FI patent 110869, in turn, depicts a thermal insulation material, where boric acid and borax (with 10, 5 or 4 crystal waters) are dissolved into water of 60-100 °C, carboxymethyl cellulose (CMC) is added as binder, and this mixture is sprayed into the fibres. According to the patent, the protective agent solution is required to be neutral. However, when mixing according to the examples of the publication, an aqueous solution is always obtained with a pH of about 9, within a very wide boric acid/borax ratio. It is well known that the mixture used has a broad pH-buffering effect. In the publication it is stated that CMC reduces the surface tension of the solution and thus facilitates penetration of possible protective components into the fibres. However, the water is quickly evaporated and the protective agents are crystallized, and are at least diffused further into the fibre. CMC is not very hygroscopic and solidifies when the water evaporates.

One of the purposes of the present invention is to generate a new thermal insulation product and a new process for its manufacture, and thus to improve the results which are obtained with solutions according to known technology, for instance by intensifying diffusion of fire retardants and anti-mould agents into the fibres of a product.

In particular, one of the purposes of the present invention is to generate a new and unexpected solution for bringing the protective agent into the fibres, and a new composition for dissolving the protective agents.

According to the process of the invention, an adequate amount of hydrogen bonds are generated between the fibres. In this process, a concentrated solution of boric acid/borax is preferably manufactured, or a concentrated mixture of boric acid, borax, magnesium sulphate, magnesium hydroxide, zinc borate, aluminium sulphate, aluminium trihydrate or potassium carbonate, or a mixture containing two or more of these inorganic fire retardants and anti-mould agents, by dissolving them together into a glycol or glycerine composition so that added water, i.e. water other than the crystal water of salts, is used at up to 20 % by weight of the whole mixture. Necessary hydrogen bonds are generated especially between the ―OH groups of glycerol and plant-based fibres. According to Bastianssen (Intramolecular Hydrogen Bonds in Ethylene Glycol and Glycerol, O. Bastianssen, Acta Chemica Scandinavica (1949) 415-421), particularly glycerol generally forms two hydrogen bonds from three ―OH groups and ethylene glycol only one. The strength of the hydrogen bond of glycerine is almost of the same magnitude as the corresponding bond of water. Compared with water, glycerine is known to be a better solvent of inorganic salts.

Kirko-Othmer, Vol 3, 1964, page 625, suggests that borax (10 crystal waters) dissolves in concentrated glycerol to a percentage of 52.6 % and in a slightly more diluted glycerol to 47.1 % and, correspondingly, page 613 describes how boric acid dissolves in concentrated glycerine to 19.9 % and in slightly more diluted glycerine to 12.1 %. The corresponding solubilities in ethylene glycol (20 °C) are 41.6 % and 18.5 %.

Thus, the present invention relates to a thermal insulation product which utilizes the above-mentioned hydrogen bonds, and which is manufactured from plant-based fibre material, and which has a density of 20-120 kg/m³, and to a process for manufacturing it.

More specifically, the thermal insulation product according to the present invention is characterized by what is stated in the characterizing part of Claim 1.

Correspondingly, the manufacturing process according to the present invention is characterized by what is stated in Claim 7.

Compared with the prior art, several advantages are achieved with the present invention. For example, it is possible to replace the known boron compounds mentioned, with regard to their fire retardant effect, partly or almost entirely (even to over 95 %) with other inorganic fire retardants. Also, the wood species suitable for the present invention has a wider variation than in known solutions. The present invention also provides an extended diffusion, due to the fact that the solvents used remain on the surface of and inside the cells for a long time, which makes it possible to manufacture very concentrated fire retardant and anti-mould agent solutions, the solvents of which evaporate poorly. Consequently, it is possible that these inorganic compounds also diffuse into the lumens of the fibres and prevent them from crystallizing. Diffusion is successful also when coarse wood chips are used, not only fibres. The finished product is both fire-resistant and reasonably strong.

Thus, the present invention concerns a thermal insulation product manufactured from plant-based fibre material, having a density of 20-120 kg/m³ and having a fibre material impregnated with an impregnation solution containing a mixture of fire retardant and anti-mould agent dissolved in a solvent composition, which is formed from glycerine, ethylene glycol, propylene glycol or low molecular weight polyethylene glycol, or their mixture, wherein, for instance, water from the hygroscopicity of these solvents may be present.

The density of the product, 20-120 kg/m³, is found to be adequate in products such as these.

The mixture of fire retardant and anti-mould agent (abbreviated protective agent mixture) preferably contains boric acid, borax, magnesium sulphate, magnesium hydroxide, zinc borate, aluminium sulphate, aluminium trihydrate or potassium carbonate, or a mixture of two or more of these inorganic protective agents. Most suitably, the mixture contains boric acid and borax, as well as one or more other protective agents. The boron compounds suitable for use also include alkali borates, such as sodium borates, although only boric acid and borax are mentioned below. The definition "boric acid/borax", in turn, includes boric acid and borax and borates, both separately and as mixtures of them.

Most suitably, the quantity of the protective agents is preferably 5-20 % of the quantity of the dry plant fibre, and specified as boric acid, borax, magnesium heptahydrate, magnesium oxide, aluminium sulphate, aluminium hydroxide or zinc borate or a mixture of them, however, in such a way that the quantity of boric acid or borax or a mixture thereof is always at least 1 % by weight of the dry weight of the fibre material.

The mixture ratio of the more preferably used combination of boric acid and borax is preferably 1/3-2/3. Preferably at least 1% of these boron compounds are present of the dry weight of the plant material, whereas generally at least 5 % of the protective agents preferably are present of the dry weight of the plant material. Preferably 30-35% of protective agents, in turn, are present in the solvent composition dissolving the agents and containing OH groups.

It is known that 1 % borax in wood material essentially prevents generation of mould and > 5 % renders a fire retardant effect. As a fire retardant, for instance MgSO₄ x 7 H₂O is even slightly more powerful than borax/boric acid.

According to the present invention, the contents of protective agents are determined in such a way that the content of boric acid is 100 and the borax contains 10 crystal waters, according to its definition. Other boron compounds, such as alkali borates (generally sodium borates) containing 4 or 5 crystal waters, are dosed in such a way that the amount of boron corresponds to the amount of borax. Correspondingly, magnesium sulphate contains 7 crystal waters.

The plant-based material which is used in the product is wood, cellulose, stalk of meadowgrass or other similar porous fibre material which contains lumens of fibre or other similar cavities, into which the protective agents can be impregnated.

The present invention also relates to a process for manufacturing such a thermal insulation product, in which the impregnation is carried out in connection with the defibring in a thermo-mechanical refiner (TMP) by using at least a slight overpressure, i.e. a pressure which is above standard pressure.

In this process, water is added into the fibre material, the fibre pulp or into the impregnation solution, in different forms, such as wood moisture, crystal water and added water, in such a way that the moisture of the fibre pulp coming out of the refiner is at least 10 %, preferably 30-40 %.

In the protective impregnation according to the present invention, the fibre, the wood chip or the sawdust is treated with a new process against fire and mould and other microbe contaminations. In this process, the impregnation chemicals penetrate into the fibres instead of remaining only on the surface of the fibres, as in prior processes.

When wood is defibred and impregnated, mostly in a disc refiner, or occasionally in a conical refiner, it is preferred to add the fire retardants and anti-mould agents pre-dissolved in liquid organic solvents. Furthermore, during the impregnation it is preferred to use a mild pressure, which increases the temperature and which drives the impregnation chemicals into the fibres and the wood chips.

After the impregnation, the pulp is blown onto an air-permeable wire, either by using impregnated fibre pulp only, or by mixing into this pulp unimpregnated pulp or known additives, or most suitably by using only unimpregnated fibre pulp, into which additives are optionally added, and which thereafter is smoothed by using another wire, in which case the pulp stays between two wires. Subsequently, the whole assembly is carried into a drying oven, in which the pulp is transformed, according to the present invention, into a thermal insulation product, most suitably an insulating sheet.

Naturally, the protectively impregnated product can be shaped to insulating sheets, grooves and similar products, and that also other known processes for manufacturing corresponding products can be used, besides or instead of the above described blowing of the pulp onto the wire.

The idea of the present invention is to bring wood material, wood chips or fibres into such a form in which extended diffusion may occur, and to bring protective agents, which are dissolved in glycerol, glycol or propylene glycol or in a mixture of them, into a non-crystallised state. As a result, the process of diffusion can be maintained until the concentration of the above-mentioned protective agents is uniform throughout.

It should be noted that boric acid dissolves into water into a maximum solution content of 5.5 % and borax into only 2.5 %. However, when a mixture of boric acid and borax is mixed for instance into ethylene glycol (shortened to glycol), the proportion being 1:1, a 50 % solution is easily obtained, which contains, besides boron compounds, typically also about 30 % glycol and about 20 % water. Unexpectedly, the viscosity of this solution is very low, almost as low as the viscosity of glycerol. In a corresponding way, it is possible to dissolve other above-mentioned fire retardants into either glycerine or glycol, or into a mixture of glycerine and glycol, or these can be partly or totally replaced with propylene glycol or with low molecular weight polyethylene glycol. Both glycerine and ethylene glycol are hygroscopic. For instance, the equilibrium percentage of glycerine, at a relative humidity of 50 % and a temperature of 20 °C, contains 20 % water.

According to a preferred embodiment of the present invention, a solution is generated, which contains borax and boric acid in a total content of about 50 % by weight, and glycerine or other glycols mentioned above or a mixture of them (i.e. an organic solvent) in a total content of about 30 %, and added water about 20 %. The proportions of glycol or polyethylene glycol and glycerine can be freely chosen.

According to a more preferred embodiment, ethylene glycol is used together with glycerine, because they improve the dissolving effect of each other in a similar way as boric acid and borax dissolve better together than separately. The glycerine/glycol mixture can contain 0-60 % glycol, the rest being glycerine, preferably, however, with a small amount of water.

It should be noted that glycerine can form 2 hydrogen bridges and glycol only one. Thus, it is preferred that all solvents of the protective agents contain a small amount of glycerine to maintain a reasonable strength of the product. Furthermore, the dehydration of the thermal insulator described above is facilitated by keeping the amount of water small, most suitably only as much as is needed to generate the hydrogen bridges which hold together the defibred product. If necessary, water can be added, for instance by spraying, when insulating panels are generated from the fibre pulp (for instance from a fibre mat).

If organic solvents suitable for the present invention are compared to cellulose derivatives having a higher molecular weight, such as the known carboxy-methyl cellulose, the desalination effect of inorganic compounds does not occur in the case of the organic solvents of the present invention, but occur with these cellulose derivatives. This is caused by differences in their molecular weights and polarity. An advantage of glycerine is also that recently its price has fallen considerably as a result of it becoming a by-product of the production ofbiofuels, such as biodiesel. Earlier, the price of ethylene glycol, in turn, was only about 1/3 of the price of glycerine. However, unlike glycol, glycerine is not toxic. At standard pressure, the boiling point of glycerine is 290 °C and of glycol 198 °C, whereby both have the advantage of remaining on the surface of and inside the fibres for long times.

With regard to their fire retardant effect, the boron compounds can be partly or totally replaced with other listed inorganic fire retardants, such as MgSO₄ x 7H₂O, Mg(OH)₂, Al(OH)₃, Al₂(SO₄)₃ x 8 H₂O, 2ZnO x 3B₂O₃ x 3,5 H₂O. All of these dissolve better in glycerine and glycols than in water. Because of their microbe and mould preventing effects, the boron compounds should still not be totally replaced by only other fire retardants and anti-mould agents. Borax and boric acid do cost about twice as much as for instance magnesium sulphate, whereby a reduced requirement saves money.

The core of the present invention is that it renders possible the manufacturing of very concentrated solutions of fire retardants and anti-mould agents, in which solutions the solvent is one that evaporates poorly. This enables diffusion of these inorganic compounds also into the lumens of the fibres and prevents their crystallisation. The diffusion is successful also for coarser wood chips, and not only for fibres. Compared with a case where for instance the boron compounds are dissolved in water (combined concentration about 15 %), the present solution provides a long-lasting effect and it is possible to treat more concentrated solutions. These solutions provide the fibres with exactly the same hydrogen bridge bonding as for instance merely a saline solution containing a water/boron compound.

The cells of wood have a so-called cuticle, i.e. a film made of water-resistant wax. The wax is similar to e.g. beeswax. Unexpectedly, this wax dissolves easily in glycerine and its melting point is 62-64 °C.

Spruce is characterized in that when drying, the aerocytes ("air bubbles") of the wood cells are irreversibly closed, i.e. dried spruce is not easily remoistened. This phenomenon does not occur with pine.

According to the present invention, regardless of the mentioned property of spruce, it is possible to treat also dry spruce, and to cause the fire retardants and anti-mould agents to penetrate into the chip and fibre. This is particularly easily achieved in a pressurized disc refiner, which have been developed for manufacturing of thermomechanical pulps. A typical pressure and corresponding temperature are, at maximum, 130 °C and 2.7 bars. Generally, even a lower temperature is enough. Preferably, about 400-800 kWh/tonne of fibre insulator of refining energy is used in the manufacturing of a wood fibre insulator. At this level of refining energy, a part of the insulating material is made up of slivers and fine wood chips, and most of it is clearly wood fibres.

The following non-limiting examples describe the invention and its advantages. Typical and exemplary amounts of raw material have been used in them, and thus are not intended to limit the amounts suitable for the implementation of the invention.

### Examples

### Example 1

100 g boric acid and 100 g borax (10 crystal waters) were dissolved in 200 g glycol (98.2 %) at a temperature of 60 °C. The mixture was dosed into a batch of refined wood chips (1400 g). The dosing was carried out by spraying simultaneously both wood chips and impregnation solution into a stream of air. The mixture was allowed to stand at room temperature for one month. After standing, the mixture was immersed in 30 litres of water for 30 seconds at room temperature, and dried at 110 °C, for 4 hours.

The dry sample was dried using a gas burner, but the sample neither caught fire nor smouldered when the gas burner was removed.

A corresponding test was carried out on a corresponding conventional product used as a thermal insulator, in which the chips and the wood fibres were from the same batch as above and in which the boron compounds were refined and added in dry form. The mixture was treated with water and dried as above. The product of this comparison caught fire in the gas burner test.

### Example 2

Spruce chips, about 2.5 x 3 cm in size, were fed into a refiner at a speed of 3000 kg/h and an effect of 1500 kW. Mixed with the chips, a solution was fed which contained 100 kg of a mixture (50/50) of borax/boric acid, and 100 kg of hydrous magnesium sulphate, 200 kg of glycerine and 25 kg of glycol. The impregnation solution was mixed in the feed screw of the refiner before being fed into a so-called screw plug, which maintains the pressure. The moisture content of the fed chips was 50 % in the feeding stage. 1500 kg/h of water was then added into the screw plug. The moisture content of the finished product was about 23 %. A small part of the glycerine and the glycol was distilled with the evaporating water. However, during the heat recovery, they were condensed and mixed into new chips.

According to this example, the wood can also be pine and partly also aspen. The wood chips to be fed should first be pre-screened to be as free from branches as possible. The additional water to be added during the refining and which when boiling removes the excess heat, should be sufficient to ensure that the fibres and wood chips do not "burn", but are left with a residual moisture content of at least 10 %.

According to the process of the invention, also spruce having already been thoroughly dried once and which is not easily moistened is usable because the temperature of the refiner always exceeds the melting point of plant waxes and, furthermore, glycerine and glycol dissolve these plant waxes. Thus, the impregnation of the wood fibres by the required protective compounds is provided.

## Claims

1. A thermal insulation product manufactured from plant-based fibre material, the density of which product is 20-120 kg/m³, **characterized in that** its fibre material is impregnated with an impregnation solution, which contains a mixture of fire retardant and anti-mould agent dissolved in a solvent composition, which is formed from glycerine, ethylene glycol, propylene glycol or low molecular weight polyethylene glycol, or a mixture of these.

2. The product according to Claim 1, **characterized in that** the mixture of fire retardant and anti-mould agent contains boric acid, borax, magnesium heptahydrate, magnesium oxide, aluminium sulphate, aluminium hydroxide or zinc borate or a mixture of these, preferably boric acid, borax or a mixture of these together with one or more other fire retardants and anti-mould agents.

3. The product according to Claim 1 or 2, **characterized in that** the solvent composition contains 30-55 % by weight of fire retardants and anti-mould agents, and the product at least 5 % by weight, of the dry weight of the fibre material.

4. The product according to any of Claims 1-3, **characterized in that** the mixture of fire retardant and anti-mould agent contains a combination of boric acid and borax at a mixing ratio of 1/3 - 2/3, and this combination accounts in total for at least 1 % by weight of the dry weight of the fibre material.

5. The product according to Claim 4, **characterized in that** the amount of fire retardants and anti-mould agents is 5-20 % of the amount of dry plant fibres.

6. The product according to any of Claims 1-5, **characterized in that** the plant-based material is wood, cellulose, stalk of meadowgrass or other similar fibre material which contains lumens of fibre or other similar cavities in the material into which the protective agents can be impregnated.

7. A process for manufacturing the product according to any of Claims 1-6, **characterized by** carrying out the impregnation of the fibre material to form fibre pulp in connection with the defibring in a thermomechanical refiner (TMP), by using a pressure which is above standardpressure, by using an impregnation solution which contains a mixture of fire retardant and anti-mould agent dissolved in a solvent composition generated from glycerine, ethylene glycol, propylene glycol or low molecular weight polyethylene glycol, or a mixture of these, bringing the impregnated fibre pulp between two wires, and drying the fibre pulp into an insulation product, to a density of 20-120 kg/m³.

8. The process according to Claim 7, **characterized by** adding water into the fibre material, the fibre pulp or the impregnation solution in the form of moisture in the wood forming the fibres, as crystal water of the materials used, or as additional water, in such a way that the moisture content of the product that exits the refiner is at least 10 %, preferably 30-40 %.

9. The process according to Claim 7 or 8, **characterized by** using as the impregnation solution a solvent composition into which a mixture of fire retardant and anti-mould agent is dissolved, which mixture contains boric acid, borax, magnesium heptahydrate, magnesium oxide, aluminium sulphate, aluminium hydroxide or zinc borate or a mixture of these, preferably boric acid, borax or a combination of these, together with one or more other fire retardants and anti-mould agents.

10. The process according to any of Claims 7-9, **characterized by** bringing the impregnated fibre pulp between two wires by blowing the pulp onto an air-permeable wire, either using only an impregnated fibre pulp or by mixing into this pulp unimpregnated pulp or known additives, and thereafter smoothening on another wire, whereby the pulp remains between the two wires, after which the whole assembly is carried into a drying oven, where the pulp is transformed into a thermal insulation product.
